(19) Europäisches Patentamt
European Patent Office
Office européen des brevets

(11) **EP 3 654 008 B1**

(12) **EUROPÄISCHE PATENTSCHRIFT**

(45) Veröffentlichungstag und Bekanntmachung des Hinweises auf die Patenterteilung:
**06.10.2021  Patentblatt 2021/40**

(51) Int Cl.:
***H01M 50/20*** *(2021.01)*

(21) Anmeldenummer: **19204791.8**

(22) Anmeldetag: **23.10.2019**

(54) **VERFAHREN ZUR ERKENNUNG EINES WASSEREINTRITTS IN EINEM GEHÄUSE, ELEKTRONISCHE SCHALTUNG ZUR DURCHFÜHRUNG DES VERFAHRENS, GEHÄUSE MIT DER ELEKTRONISCHEN SCHALTUNG UND FAHRZEUG MIT DEM GEHÄUSE**

METHOD FOR DETECTING A WATER PENETRATION IN A HOUSING, ELECTRONIC CIRCUIT FOR IMPLEMENTING THE METHOD, HOUSING WITH THE ELECTRONIC CIRCUIT AND VEHICLE WITH THE HOUSING

PROCÉDÉ DE DÉTECTION D'UNE PÉNÉTRATION D'EAU DANS UN LOGEMENT, CIRCUIT ÉLECTRONIQUE POUR LA MISE EN OUVRE DU PROCÉDÉ, LOGEMENT AVEC LE CIRCUIT ÉLECTRONIQUE ET VÉHICULE AVEC LE LOGEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.11.2018  DE 102018219370**

(43) Veröffentlichungstag der Anmeldung:
**20.05.2020  Patentblatt 2020/21**

(73) Patentinhaber: **Robert Bosch GmbH**
**70442 Stuttgart (DE)**

(72) Erfinder:
• **GRONBACH, Walter**
**72664 Kohlberg (DE)**
• **JOST, Thomas**
**72555 Metzingen (DE)**

(56) Entgegenhaltungen:
**DE-A1-102013 212 593    US-A1- 2017 003 229**

**Beschreibung**

Die vorliegende Erfindung betrifft ein Verfahren zur Erkennung eines Wassereintritts in einem Gehäuse in Abhängigkeit einer erfassten Temperatur und einer erfassten relativen Feuchtigkeit. Die Erfindung betrifft auch eine elektronische Schaltung zur Durchführung des Verfahrens sowie ein Gehäuse mit der elektronischen Schaltung und ein Fahrzeug mit dem Gehäuse, insbesondere ein Elektrofahrrad.

Stand der Technik

Eine absolute Luftfeuchtigkeit $\rho$ ist die in einem Luftvolumen V enthaltene Wasserdampfmasse $m_W$ gemäß Gleichung (1), welche üblicherweise in der Einheit g/m$^3$ angegeben wird. Die Luftfeuchtigkeit $\rho$ kann gemäß der idealen Gasgleichung alternativ als Verhältnis des Partialdrucks des Wasserdampfes $e_W$ zu dem Produkt aus individueller Gaskonstante des Wassers Rw und absoluter Temperatur T beschrieben werden.

$$\rho = \frac{m_W}{V} = \frac{e_W}{R_W \cdot T} \qquad (1)$$

Eine relative Luftfeuchtigkeit $\varphi$ ist ein Verhältnis der absoluten Luftfeuchtigkeit $\rho$ zur maximal möglichen Masse an Wasserdampf $\rho_{max}$ in der Luft beziehungsweise das Verhältnis des Partialdrucks des Wasserdampfes $e_W$ zu dessen Sättigungsdampfdruck $e_{sat}$ nach Gleichung (2). Die relative Luftfeuchtigkeit $\varphi$ kann mittels eines Feuchtesensors erfasst beziehungsweise gemessen werden, beispielsweise durch Absorption von Wasser innerhalb einer porösen Polymermatrix, wodurch eine Dielektrizitätskonstante verändert wird. Der Sättigungsdampfdruck $e_{sat}$ ist temperaturabhängig und kann beispielsweise mit Hilfe der Magnus-Formel bestimmt werden, siehe Gleichung (3), wobei C1, C2 und C3 temperaturabhängige Konstanten sind.

$$\varphi = \frac{\rho}{\rho_{max}} = \frac{e_W}{e_{sat}} \qquad (2)$$

$$e_{sat} = C1 \cdot exp\left[\frac{C2 \cdot T}{C3 + T}\right] \qquad (3)$$

Der Taupunkt bezeichnet eine Temperatur eines gesättigten Gasgemisches in einem Gleichgewichtszustand, das heißt bei welchem sich Kondensation und Verdunstung des feuchten Bestandteils ausgleichen. Bei Temperaturen T kleiner dem Taupunkt $_T$ kommt es zur Kondensatbildung. Der Taupunkt $_T$ ist abhängig von dem Partialdruck des Wasserdampfes $e_W$ gemäß Gleichung (4), wobei C1, C2 und C3 die temperaturabhängigen Konstanten sind.

$$\tau(e_W) = \frac{C3 \cdot ln\frac{e_W}{C1}}{C2 - ln\frac{e_W}{C1}} \qquad (4)$$

Gehäuse für elektronische Komponenten, insbesondere elektronische Schaltungen und Batterien, werden normalerweise mittels Polymerdichtungen gegen einen Wassereintritt aus der Umgebung des Gehäuses dicht verschlossen beziehungsweise abgedichtet. Die in einem Innenraum eines Gehäuses für elektronische Komponenten eingeschlossene Luft ist typischerweise trocken beziehungsweise weist eine niedrige absolute Luftfeuchtigkeit und typischerweise eine Temperatur zwischen - 30 °C und 80 °C, insbesondere zwischen -20 °C und 50 °C, auf. Mit anderen Worten weist normalerweise die eingeschlossene Luft einen ungesättigten Zustand auf, weshalb Wasser im Innenraum des Gehäuses im gesamten Temperaturbereich einer Anwendung im Wesentlichen als Wasserdampf vorliegt, wobei beispielsweise Kunststoffanteile des Gehäuses zusätzlich auch Wasser absorbieren bzw. binden und/oder desorbieren können. Der Taupunkt $_T$ der Atmosphäre in einem Innenraum eines Gehäuses von einer elektrischen Schaltung ist normalerweise folglich niedrig, wodurch eine für die elektronischen Komponenten schädliche Kondensatbildung vermieden wird.

Durch beispielsweise einen Fehlgebrauch bei der Reinigung, insbesondere durch eine Anwendung von Hochdruck-Reinigern im Bereich der Dichtungen, durch mechanische Beschädigungen und/oder Materialermüdung kann allerdings ein Wassereintritt in den Innenraum des Gehäuses erfolgen.

Eine elektrische Schaltung zur Steuerung eines Elektromotors eines Elektrofahrrads ist beispielsweise in einem Gehäuse einer Antriebseinheit an der Kurbelwelle des Elektrofahrrads angeordnet, wobei das Gehäuse vorteilhafterweise zusätzlich den Elektromotor umfasst. Die Anordnung des Elektromotors beziehungsweise des Gehäuses im Bereich der Kurbelwelle hat einige technische Vorteile, beispielsweise bezüglich einer Gewichtsverteilung und/oder des Schwerpunktes des Elektrofahrrad beziehungsweise bezüglich des Fahrgefühls für den Fahrer. Allerdings ist ein Wassereintritt in das Gehäuse der Antriebseinheit durch Spritzwasser während der Fahrt und/oder durch eine mechanische Beschädigung des Gehäuses durch Steinschlag, Bodenberührung oder ähnliches an dieser Anbauposition an der Kurbelwelle wahrscheinlicher als beispielsweise bei einer Anordnung des Antriebsmotors an einer Radnabe. Des Weiteren kann eine Materialermüdung durch einen ungünstigen Stellplatz eines Elektrofahrrads beschleunigt werden. Die Dichtigkeitsanforderungen an beispielsweise eine Antriebseinheit eines Elektrofahrrads sind folglich hoch, wobei durch eine Reparatur nach einer schnellen Erkennung eines Wassereintritts mittel- und langfristige Schädigungen der Antriebseinheit vermieden werden.

Die Schrift DE 102 49 370 A1 offenbart ein Gehäuse eines Steuergerätes mit einem Feuchtigkeitssensor zur Detektion eines Eindringens von Feuchtigkeit.

Das Dokument DE 10 2012 023 073 A1 offenbart eine Servolenkvorrichtung mit einem Feuchtigkeitssensor.

DE 10 2013 212593 A1 offenbart ein Verfahren zur Erkennung eines Wassereintritts in einem Innenraum eines gegenüber einer Umgebung abgedichteten Gehäuses basieren auf einer Messung der Temperatur und Luftfeuchtigkeit im Innenraum des Gehäuses.

Die Aufgabe der vorliegenden Erfindung ist es eine Erkennung eines Wassereintritts in einem Gehäuse zu verbessern.

Offenbarung der Erfindung

Die vorstehende Aufgabe wird gemäß der unabhängigen Ansprüche 1 und 10.

Die vorliegende Erfindung betrifft ein Verfahren zur Erkennung eines Wassereintritts in einen Innenraum eines gegenüber einer Umgebung abgedichteten Gehäuses gemäß Anspruch 1. Das abgedichtete Gehäuse weist, vorteilhafterweise in dem Innenraum, mindestens eine elektrische Schaltung, insbesondere zur Steuerung eines Fahrzeugs, vorteilhafterweise eines Elektrofahrrads als Fahrzeug, und/oder eine Stromquelle, insbesondere zur Bereitstellung einer Energie zum Antrieb des Fahrzeugs beziehungsweise Elektrofahrrads, auf. Ferner umfasst das abgedichtete Gehäuse vorzugsweise eine elektrische Schnittstelle zwischen dem Innenraum und einer Außenseite des Gehäuses. Das erfindungsgemäße Verfahren weist eine Erfassung einer Temperatur in dem Innenraum des Gehäuses auf. Die Temperaturerfassung erfolgt bevorzugt mittels eines Temperatursensors, welcher in dem Innenraum angeordnet ist. In einem weiteren Schritt wird eine relative Luftfeuchte in dem Innenraum des Gehäuses erfasst. Die Erfassung der relativen Luftfeuchte erfolgt bevorzugt mittels eines Feuchtesensors, welcher ebenfalls in dem Innenraum angeordnet ist. Ferner wird anschließend eine Erkennung eines Wassereintritts in das Gehäuse in Abhängigkeit der erfassten Temperatur und der erfassten relativen Luftfeuchte durchgeführt. Durch das Verfahren entsteht der Vorteil das eine absolute Feuchte und/oder ein Taupunkt der Luft im Innenraum ermittelt wird, wobei beispielsweise bei einer Überschreitung eines Schwellenwertes der Wassereintritt erkannt wird.

Durch dieses Verfahren kann auch ein Eintritt sehr kleiner Wassermengen vorteilhafterweise erkannt werden, da die Gleichgewichtsverschiebung zwischen Kondensation und Verdunstung der Luft auch bei kleinen Mengen in dem Innenraum eines Gehäuses erfolgt. Durch dieses Verfahren wird vorteilhafterweise die Erkennung eines Wassereintritts mittels zweier Sensoren, das heißt dem Temperatursensor und dem Feuchtesensor, ermöglicht, wobei die zwei Sensoren vor beispielsweise chemischen und/oder mechanischen Einwirkungen im Innenraum des Gehäuses geschützt angeordnet sind.

Erfindungsgemäß wird die Ermittlung des Wassereintritts in Abhängigkeit einer Differenz zwischen der erfassten Temperatur und eines in Abhängigkeit der erfassten relativen Luftfeuchte und der erfassten Temperatur ermittelten Taupunktes durchgeführt. Bei einem Eintritt von Wasser ändert sich für die Ermittlung des Wassereintritts vorteilhafterweise das Gleichgewicht zwischen Kondensation und Verdunstung, wodurch insbesondere der Taupunkt steigt. Diese Differenz zwischen der erfassten Temperatur und eines in Abhängigkeit der erfassten Temperatur und der erfassten relativen Luftfeuchte ermittelten Taupunktes repräsentiert einen aktuellen Temperaturabstand bis zur Bildung eines Kondensats. Die Differenz beziehungsweise dieser Temperaturabstand hat sich empirisch vorteilhafterweise als zuverlässiges Gütemaß zur Erkennung des Wassereintritts erwiesen.

In einer besonders bevorzugten Ausgestaltung erfolgt die Erkennung des Wassereintritts in Abhängigkeit einer Änderungsrate der Differenz zwischen der erfassten Temperatur und des ermittelten Taupunktes. Die Berücksichtigung der Änderungsrate der Differenz hat sich empirisch vorteilhafterweise als schnelles und sehr zuverlässiges Gütemaß zur Erkennung des Wassereintritts erwiesen.

In einer Weiterführung erfolgt die Erkennung des Wassereintritts erfolgt, wenn die Differenz und/oder die Änderungsrate der Differenz jeweils einen statischen oder dynamischen Schwellenwert überschreitet. Der Schwellenwert ist bevorzugt dynamisch. Durch diese Weiterführung erfolgt die Erkennung des Wassereintritts besonders schnell und besonders zuverlässig.

In einer Ausführung des Verfahrens wird einem Nutzer eine Wassereintrittsinformation in Abhängigkeit der Erkennung des Wassereintritts angezeigt, insbesondere mittels einem Display eines Elektrofahrrads. Durch diese Ausführung wird ein Nutzer vorteilhafterweise über einen erkannten Wassereintritt informiert.

In einer vorteilhaften Ausführung des Verfahrens erfolgt als ein weiterer Schritt im Verfahren eine Anpassung eines elektrischen Lade- oder Entladestroms einer Stromquelle in Abhängigkeit des erkannten Wassereintritts, wobei die Stromquelle in dem Innenraum des Gehäuses angeordnet ist. Die Stromquelle ist insbesondere eine Batterie, bevorzugt eine Batterie eines Elektrofahrrads. Diese Anpassung kann vorteilhafterweise ein Abschalten des Stromflusses repräsentieren. Durch die Anpassung des Lade- oder Entladestroms wird vorteilhafterweisen eine Schädigung der Batterie und/oder anderer elektrischer Komponenten und insbesondere ein Kurzschluss vermieden.

In einer weiteren Ausgestaltung wird nach einer Erkennung des Wassereintritts eine Speicherung eines Fehlercodes in einen elektronischen Speicher in Abhängigkeit des erkannten Wassereintritts durchgeführt. Dadurch wird vorteilhafterweise bei einer späteren Wartung ein ermittelter Wassereintritt erkannt, wodurch dieser als Fehlerursache zu beispielsweise Reparaturzwecken berücksichtigt werden kann.

Ferner erfolgt vorzugsweise eine Änderung eines Serviceintervalls in Abhängigkeit des erkannten Wassereintritts, wobei das Serviceintervall einem Fahrer eines Fahrzeugs, welches das Gehäuse aufweist, insbesondere eines Elektrofahrrads, vorteilhafterweise angezeigt wird. Dadurch wird der Nutzer beziehungsweise Fahrer des Elektrofahrrads vorteilhafterweise dazu angeregt, das Gehäuse von einem Fachmann reparieren zu lassen.

In einer anderen Weiterführung wird ein Servicetermin in Abhängigkeit des erkannten Wassereintritts mittels einer Funkverbindung zu einer Datenbank einer Servervorrichtung automatisch erstellt und einem Nutzer des Gehäuses beziehungsweise einem Fahrer auf einer Anzeigevorrichtung angezeigt beziehungsweise vorgeschlagen, wobei der Nutzer diesen Servicetermin vorteilhafterweise durch eine Eingabe mittels einer Eingabevorrichtung ablehnen, bestätigen oder verschieben kann. Durch die Funkverbindung zu der Datenbank der Servervorrichtung werden Nutzerdaten und die Eingabedaten an die Servervorrichtung übertragen, wobei die Servervorrichtung den Servicetermin bevorzugt an eine Reparaturwerkstatt sendet. Dadurch wird auf einen Wassereintritt vorteilhafterweise sofort reagiert, so dass mittelfristige und langfristige Schädigungen durch den Wassereintritt vermieden werden.

In einer anderen Weiterführung des Verfahrens erfolgt eine Freisetzung eines Trockenmittels in Abhängigkeit des erkannten Wassereintritts in dem Innenraum des Gehäuses, beispielsweise wird ein Silicagel und/oder ein Zeolith freigesetzt. Durch das Trockenmittel wird vorteilhafterweise die mögliche schädliche Auswirkung des Wassereintritts zumindest reduziert. Diese Freisetzung kann beispielsweise durch Öffnung einer Verschlusseinrichtung erfolgen, beispielsweise einer mechanisch vorgespannten Klappe und/oder einer sich bei einem Stromfluss öffnenden Schmelzmembran.

Die Erfindung betrifft auch ein System nach Anspruch 10.

Das Gehäuse ist insbesondere ein Gehäuse eines Displays einer Batterie oder einer Antriebseinheit eines Fahrzeugs ist.

Die Erfindung betrifft darüber hinaus ein Fahrzeug mit mindestens diesem Gehäuse, wobei das Fahrzeug insbesondere ein Elektrofahrrad ist.

Weitere Vorteile ergeben sich aus der nachfolgenden Beschreibung von Ausführungsbeispielen mit Bezug zu den Figuren.

Figur 1: Gehäuse
Figur 2: Elektrofahrrad mit dem Gehäuse
Figur 3: Ablaufdiagramm des Verfahrens zur Erkennung des Wassereintritts
Figur 4a: Diagramm zum Verlauf der ermittelten Differenz ohne Wassereintritt
Figur 4b: Diagramm zum Verlauf der ermittelten Differenz bei einem Wassereintritt
Figur 5a: Diagramm zum Verlauf der Änderungsrate ohne Wassereintritt
Figur 5b: Diagramm zum Verlauf der Änderungsrate bei einem Wassereintritt

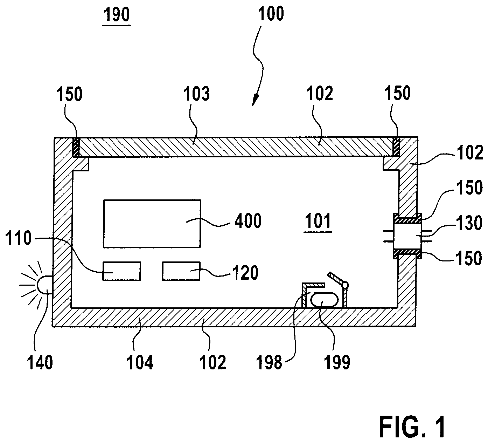

In Figur 1 ist ein Gehäuse 100 dargestellt, beispielsweise einer Antriebseinheit 230 eines Elektrofahrrads. Das Gehäuse 100 weist in einem Innenraum 101 einen Feuchtesensor 110 und einen Temperatursensor 120 auf. Das Gehäuse 100 umfasst ferner eine elektronische Schaltung 400 zur Durchführung eines erfindungsgemäßen Verfahrens. Die elektronische Schaltung 400 kann vorteilhafterweise zusätzlich dazu eingerichtet sein, einen Elektromotor eines Elektrofahrrads zum Antrieb des Elektrofahrrads anzusteuern. Des Weiteren sind an einer Außenwand 102 des Gehäuses 100 elektrische Schnittstellen 130 dargestellt. Darüber hinaus weist das Gehäuse 100 Anzeigemittel 140, beispielsweise LED-Elemente, auf. Das Gehäuse 100 ist mittels mindestens einer Polymerdichtung 150 gegenüber einem Wassereintritt aus der Umgebung 190 abgedichtet. Das Gehäuse 100 umfasst beispielsweise einen Deckel 103 und ein Grundgehäuse 104, wobei zwischen dem Deckel 103 und dem Grundgehäuse 104 sowie an den elektrischen Schnittstellen 130 beispielsweise Polymerdichtungen 150 angeordnet sind. Das Gehäuse 100 kann durch eine Stoßbelastung oder durch langfristige Materialermüdung, beispielsweise der Polymerdichtungen 150, Schädigungen beziehungsweise Undichtigkeiten aufweisen, wodurch ein kurzfristiger oder langfristiger Wassereintritt erfolgt. Des Weiteren ist in dem Gehäuse 100 optional ein zusätzlich abgeschlossener Raum 198 mit einem Trockenmittel 199 vorgesehen, wobei der Raum 198 im Falle eines erkannten Wassereintritts geöffnet und das Trockenmittel 199 freigesetzt wird. Optional und bevorzugt umfasst das Gehäuse 100 ein Druckausgleichselement (in Figur 1 nicht dargestellt), welches den atmosphärischen Druck zwischen dem Innenraum 101 des Gehäuses und der Umgebung 190 ausgleicht. Durch das optionale Druckausgleichselement kann vorteilhafterweise eine Dichtwirkung der Polymerdichtungen 150 verbessert werden.

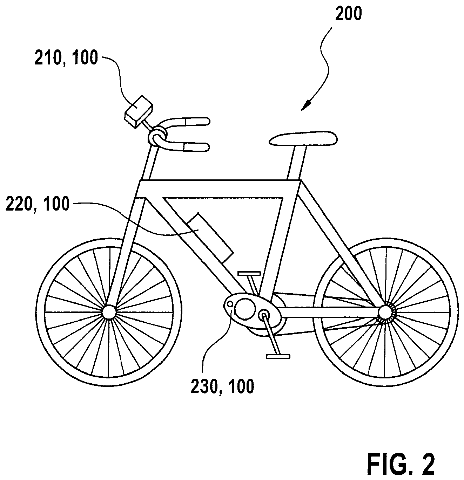

In Figur 2 ist ein Elektrofahrrad 200 umfassend eine Batterie 220, ein Display 210 und eine Antriebseinheit 230, welche beispielsweise eine elektronische Schaltung beziehungsweise ein Steuergerät umfassen kann, dargestellt. Die Batterie 220 und/oder das Display 210 und/oder die Antriebseinheit 230 weisen ein erfindungsgemäßes Gehäuse 100 auf.

Das Gehäuse 100 kann alternativ beispielsweise in anderen technischen Anwendungen zum Einsatz kommen, beispielsweise kann das Gehäuse 100 eine sicherheitsrelevante elektrische Schaltung eines Fahrzeugs umfassen. Beispielsweise ist das Gehäuse ein Gehäuse einer Leistungselektronik eines Elektrofahrzeugs, ein Gehäuse 100 einer Steuerung eines Lenksystems eines Fahrzeugs, ein Gehäuse 100 einer Batterie oder eines Batteriemanagementsystems eines Fahrzeugs oder ein Gehäuse eines Elektrowerkzeugs.

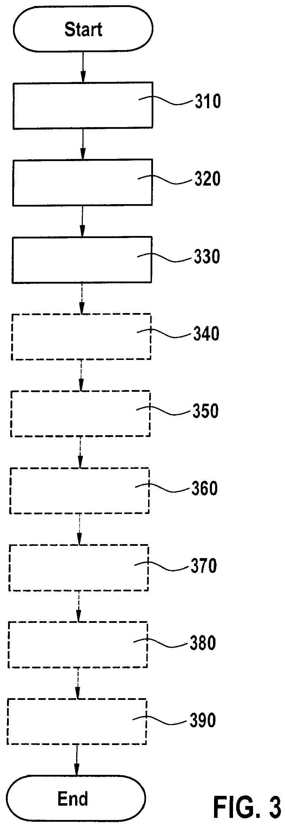

In Figur 3 ist ein Ablaufdiagramm des Verfahrens zur Erkennung 330 eines Wassereintritts in das Gehäuse 100 dargestellt. Das Verfahren weist einen Schritt 310 auf, in welchem eine aktuelle Temperatur in dem Innenraum 101 des Gehäuses 100 erfasst wird. In dem Schritt 320 wird eine relative Luftfeuchte der Luft in dem Innenraum 101 des Gehäuses 100 erfasst. Anschließend erfolgt in dem Schritt 330 eine Erkennung des Wassereintritts in Abhängigkeit der erfassten Temperatur und der erfassten relativen Luftfeuchte. Die Erkennung 330 des Wassereintritts erfolgt in Abhängigkeit einer ermittelten Differenz $\Delta$ zwischen der erfassten Temperatur T und eines in Abhängigkeit der erfassten relativen Luftfeuchte $\varphi$ und in Abhängigkeit der erfassten Temperatur T ermittelten Taupunktes $_T$. Die Erkennung des Wassereintritts erfolgt beispielsweise, wenn diese ermittelte Differenz $\Delta$ einen Schwellenwert unterschreitet beziehungsweise überschreitet. Alternativ und bevorzugt erfolgt die Erkennung 330 des Wassereintritts in Abhängigkeit einer zeitlichen Änderungsrate $\dot{\Delta}$ der ermittelten Differenz $\Delta$, insbesondere wenn die zeitlichen Änderungsrate $\dot{\Delta}$ der Differenz $\Delta$ einen statischen oder dynamischen Schwellenwert S überschreitet. Der Schwellenwert S ist bevorzugt dynamisch. Der Schwellenwert S wird vorteilhafterweise in Abhängigkeit einer oder mehrerer statistischer Kennzahlen der zeitlichen Änderungsrate $\dot{\Delta}$ der Differenz $\Delta$ ermittelt, beispielsweise eines Mittelwertes und/oder einer Standardabweichung und/oder eines Vielfachen der Standardabweichung. Bei der Ermittlung des dynamischen Schwellenwertes werden vorteilhafterweise die statistischen Kennzahlen der zeitlichen Änderungsrate $\dot{\Delta}$ der Differenz $\Delta$ in einer Zeitspanne vor dem aktuellen Zeitpunkt beziehungsweise gleitend ermittelt. Optional wird in einem Schritt 340 einem Nutzer eine Wassereintrittsinformation in Abhängigkeit der Erkennung 330 des Wassereintritts angezeigt, beispielsweise mittels des Anzeigemittels 140. Außerdem kann eine optionale Anpassung 350 eines elektrischen Lade- oder Entladestroms einer Stromquelle beziehungsweise Batterie, welche in dem Innenraum des Gehäuses 100 angeordnet ist, in Abhängigkeit des erkannten Wassereintritts durchgeführt werden. Die Anpassung 350 eines elektrischen Lade- oder Entladestroms kann bis zur Abschaltung der Stromquelle mittels eines elektrischen Schalters erfolgen. Es kann ferner eine optionale Speicherung 360 eines Fehlercodes in einem elektronischen Speicher in Abhängigkeit des erkannten Wassereintritts durchgeführt werden, wobei der elektronische Speicher vorteilhafterweise ebenfalls in dem Gehäuse 100 angeordnet ist und beispielsweise mittels der Schnittstelle 130 ausgelesen werden kann. Ferner erfolgt optional eine Änderung 370 eines Serviceintervalls eines Fahrzeugs in Abhängigkeit des im Schritt 330 erkannten Wassereintritts. In einer optionalen Weiterführung wird im optionalen Schritt 380 ein Servicetermin in Abhängigkeit des erkannten Wassereintritts mittels einer Funkverbindung zu einer Servervorrichtung erstellt und insbesondere dem Nutzer angezeigt. Optional kann des Weiteren eine Freisetzung 390 eines Trockenmittels 199 in dem Innenraum 101 des Gehäuses 100 in Abhängigkeit des erkannten Wassereintritts vorgesehen sein.

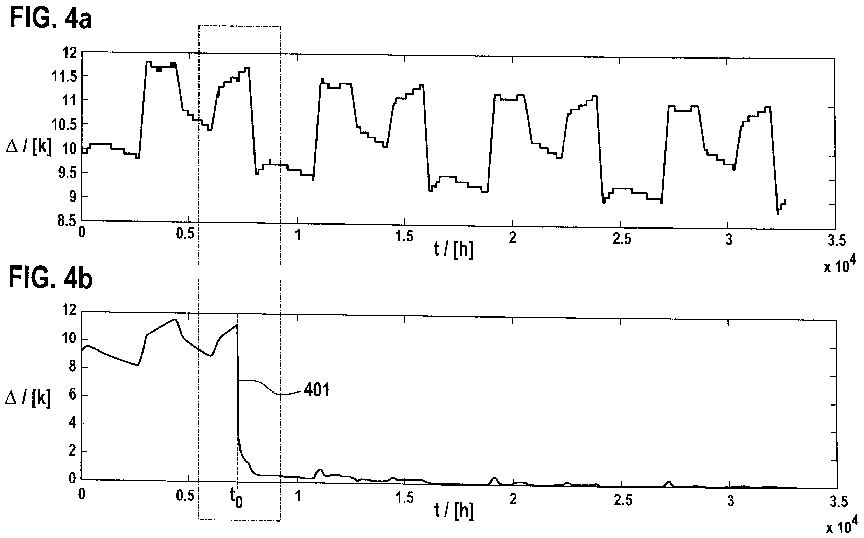

In den Figuren 4a und 4b ist jeweils ein Diagramm des zeitlichen Verlaufs der zur Erkennung 330 des Wassereintritts ermittelten Differenz $\Delta$ zwischen der im Schritt 310 erfassten aktuellen Temperatur T und dem in Abhängigkeit der im Schritt 320 erfassten relativen Luftfeuchte $\varphi$ und in Abhängigkeit der im Schritt 310 erfassten Temperatur T ermittelten Taupunkt $_T$ dargestellt. Die ermittelten Differenz $\Delta$ weist die Einheit [K] auf. Die Zeit ist in Stunden beziehungsweise [h] angegeben. Der Verlauf der ermittelten Differenz $\Delta$ zeigt zwar natürliche Schwankungen beziehungsweise ein Rauschen, allerdings keine starken Abweichungen, da kein Wassereintritt vorliegt. In Figur 4b erfolgt zum Zeitpunkt t0 beziehungsweise nach ca. 45 Minuten ein Wassereintritt 401 in das Gehäuse 100, wodurch die ermittelte Differenz $\Delta$ stark absinkt. Der Wassereintritt kann folglich durch diese ermittelte Differenz $\Delta$ zuverlässig erkannt werden, sobald beispielsweise die ermittelte Differenz $\Delta$ einen statischen oder dynamischen Schwellenwert überschreitet beziehungsweise unterschreitet. Die ermittelte Differenz $\Delta$ sinkt beispielsweise deutlich, auch wenn nur ein Eintritt einer kleinen Menge an Wasser in das Gehäuse 100 erfolgt, da auch durch eine kleine Menge Wasser immer eine Gleichgewichtsverschiebung zwischen der Verdunstung und der Kondensation vorliegt.

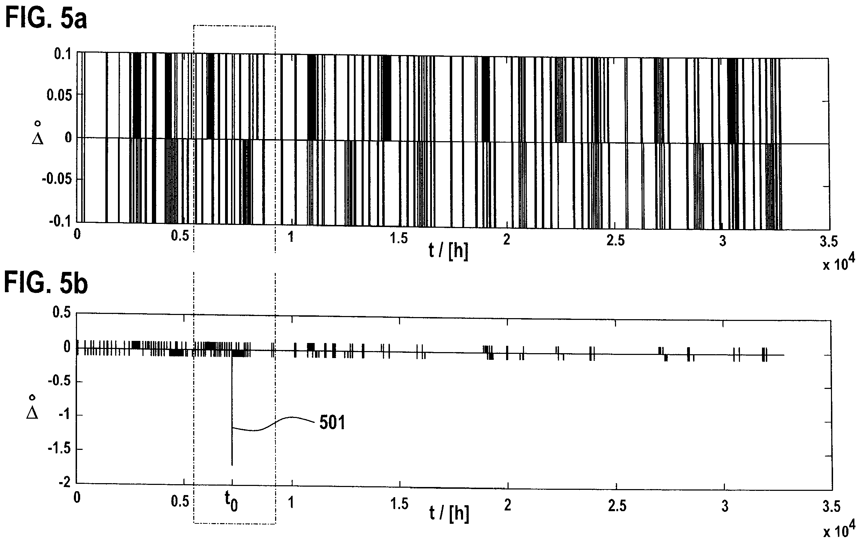

In den Figuren 5a und 5b ist jeweils ein Diagramm des zeitlichen Verlaufs der zur Erkennung 330 des Wassereintritts ermittelten zeitlichen Änderungsrate $\dot{\Delta}$ der Differenz $\Delta$ zwischen der im Schritt 310 erfassten aktuellen Temperatur T und dem in Abhängigkeit der im Schritt 320 erfassten relativen Luftfeuchte $\varphi$ und in Abhängigkeit der im Schritt 310 erfassten aktuellen Temperatur T ermittelten Taupunkt $_T$ dargestellt. Die Figur 5a korrespondiert zur Figur 4a (d.h.

kein Wassereintrag) und die Figur 5b korrespondiert zur Figur 4b (d.h. mit Wassereintrag). Die ermittelte Änderungsrate $\dot{\Delta}$ weist die Einheit [K/h] auf. Die Zeit ist in Stunden h angegeben. Der Verlauf der ermittelten Änderungsrate $\dot{\Delta}$ zeigt in Figur 5a Schwankungen beziehungsweise Rauschen, allerdings keine starken Abweichungen, da kein Wassereintritt vorliegt. In Figur 5b erfolgt zum Zeitpunkt t0 beziehungsweise nach ca. 45 Minuten ein Wassereintritt 501 in das Gehäuse 100, wodurch ein Betrag der ermittelten Änderungsrate $\dot{\Delta}$ steigt. Der Wassereintritt 501 kann folglich durch diese ermittelte Änderungsrate $\dot{\Delta}$ schnell und zuverlässig erkannt werden, beispielsweise bei einer Überschreitung eines statischen Schwellenwertes oder bevorzugt bei einer Überschreitung eines dynamischen Schwellenwertes.

## Patentansprüche

1. Verfahren zur Erkennung (330) eines Wassereintritts in einem Innenraum (101) eines gegenüber einer Umgebung (190) abgedichteten Gehäuses (100), aufweisend die folgenden Schritte

   • Erfassung (310) einer Temperatur (T) der Luft in dem Innenraum (101),
   • Erfassung (320) einer relativen Luftfeuchte ($\varphi$) im Innenraum (101), und
   • Erkennung (330) eines Wassereintritts in Abhängigkeit der erfassten Temperatur (T) und der erfassten relativen Luftfeuchte ($\varphi$).

   **dadurch gekennzeichnet, dass** die Erkennung (330) des Wassereintritts in Abhängigkeit einer Differenz ($\Delta$) zwischen der erfassten Temperatur (T) und eines in Abhängigkeit der erfassten relativen Luftfeuchte ($\varphi$) und der erfassten Temperatur (T) ermittelten Taupunktes ($_T$) erfolgt.

2. Verfahren nach Anspruch 1, **dadurch gekennzeichnet, dass** die Erkennung des Wassereintritts in Abhängigkeit einer zeitlichen Änderungsrate ($\dot{\Delta}$) der Differenz ($\Delta$) erfolgt.

3. Verfahren nach Anspruch 2, **dadurch gekennzeichnet, dass** die Erkennung des Wassereintritts erfolgt, wenn die Differenz ($\Delta$) und/oder die Änderungsrate ($\dot{\Delta}$) der Differenz ($\Delta$) jeweils einen statischen oder dynamischen Schwellenwert (S) überschreitet.

4. Verfahren nach einem der vorhergehenden Ansprüche, **dadurch gekennzeichnet, dass** folgender Schritt durchgeführt wird

   • Anzeige (340) einer Wassereintrittsinformation in Abhängigkeit der Erkennung (330) des Wassereintritts.

5. Verfahren nach einem der vorhergehenden Ansprüche, **dadurch gekennzeichnet, dass** folgender Schritt durchgeführt wird

   • Anpassung (350) eines elektrischen Lade- oder Entladestroms einer Stromquelle, welche in dem Innenraum (101) des Gehäuses (100) angeordnet ist, insbesondere einer Batterie, in Abhängigkeit des erkannten Wassereintritts.

6. Verfahren nach einem der vorhergehenden Ansprüche, **dadurch gekennzeichnet, dass** folgender Schritt durchgeführt wird

   • Speicherung (360) eines Fehlercodes in einem elektronischen Speicher in Abhängigkeit des erkannten Wassereintritts.

7. Verfahren nach einem der vorhergehenden Ansprüche, **dadurch gekennzeichnet, dass** folgender Schritt durchgeführt wird

   • Änderung (370) eines Serviceintervalls eines Fahrzeugs in Abhängigkeit des erkannten Wassereintritts.

8. Verfahren nach einem der vorhergehenden Ansprüche, **dadurch gekennzeichnet, dass** folgender Schritt durchgeführt wird

   • Erstellung (380) eines Servicetermins in Abhängigkeit des erkannten Wassereintritts mittels einer Funkverbindung zu einer Servervorrichtung.

9. Verfahren nach einem der vorhergehenden Ansprüche, **dadurch gekennzeichnet, dass** folgender Schritt durchgeführt wird

• Freisetzung (390) eines Trockenmittels in Abhängigkeit des erkannten Wassereintritts.

10. System umfassend ein Gehäuse (100) umfassend einen gegenüber einer Umgebung (190) abgedichteten Innenraum (101), einen Feuchtesensor (110) zur Erfassung einer relativen Luftfeuchte ($\varphi$) im Innenraum (101), und einen Temperatursensor (120) zur Erfassung einer Temperatur (T) im Innenraum (101) und eine elektronische Schaltung (400), wobei das Gehäuse (100) insbesondere ein Gehäuse eines Displays (210), einer Batterie (220) oder einer Antriebseinheit (230) eines Fahrzeugs ist, **dadurch gekennzeichnet, dass** die elektronische Schaltung (400) zur Durchführung eines Verfahrens nach einem der Ansprüche 1 bis 9 eingerichtet ist, wobei die elektronische Schaltung insbesondere zusätzlich dazu eingerichtet ist, einen Elektromotor eines Elektrofahrrads zum Antrieb des Elektrofahrrads anzusteuern.

11. Fahrzeug mit mindestens einem System nach Anspruch 10, wobei das Fahrzeug insbesondere ein Elektrofahrrad (200) ist.

## Claims

1. Method for identifying (330) an ingress of water into an interior (101) of a housing (100) that is sealed off from a surrounding area (190), comprising the following steps

• sensing (310) a temperature (T) of the air in the interior (101),
• sensing (320) a relative atmospheric humidity ($\varphi$) in the interior (101), and
• identifying (330) an ingress of water as a function of the sensed temperature (T) and the sensed relative atmospheric humidity ($\varphi$),

**characterized in that** the ingress of water is identified (330) as a function of a difference ($\Delta$) between the sensed temperature (T) and a dew point ($\tau$) that is ascertained as a function of the sensed relative atmospheric humidity ($\varphi$) and the sensed temperature (T) .

2. Method according to Claim 1, **characterized in that** the ingress of water is identified as a function of the rate of change ($\dot{\Delta}$) in the difference ($\Delta$) over time.

3. Method according to Claim 2, **characterized in that** the ingress of water is identified if the difference ($\Delta$) and/or the rate of change ($\dot{\Delta}$) in the difference ($\Delta$) respectively exceed/exceeds a static or dynamic threshold value (S).

4. Method according to one of the preceding claims, **characterized in that** the following step is carried out

• displaying (340) an item of information relating to the ingress of water as a function of the identification (330) of the ingress of water.

5. Method according to one of the preceding claims, **characterized in that** the following step is carried out

• adjusting (350) an electrical charging or discharge current of a current source which is arranged in the interior (101) of the housing (100), in particular of a battery, as a function of the identified ingress of water.

6. Method according to one of the preceding claims, **characterized in that** the following step is carried out

• storing (360) a fault code in an electronic memory as a function of the identified ingress of water.

7. Method according to one of the preceding claims, **characterized in that** the following step is carried out

• changing (370) a service interval of a vehicle as a function of the identified ingress of water.

8. Method according to one of the preceding claims, **characterized in that** the following step is carried out

• creating (380) a service appointment by means of a radio link to a server apparatus as a function of the identified ingress of water.

9. Method according to one of the preceding claims, **characterized in that** the following step is carried out

• releasing (390) a desiccant as a function of the identified ingress of water.

10. System comprising a housing (100) comprising an interior (101) which is sealed off from a surrounding area (190), a humidity sensor (110) for sensing a relative atmospheric humidity ($\varphi$) in the interior (101) and a temperature sensor (120) for detecting a temperature (T) in the interior (101), and an electronic circuit (400), wherein the housing (100) is, in particular, a housing of a display (210), of a battery (220) or of a drive unit (230) of a vehicle, **characterized in that** the electronic circuit (400) is designed for carrying out a method according to one of Claims 1 to 9, wherein the electronic circuit is, in particular additionally, designed to activate an electric motor of an electric bicycle for driving the electric bicycle.

11. Vehicle having at least one system according to Claim 10, wherein the vehicle is, in particular, an electric bicycle (200).

**Revendications**

1. Procédé permettant d'identifier (330) une infiltration d'eau dans un espace intérieur (101) d'un boîtier (100) scellé par rapport à un environnement (190), présentant les étapes suivantes

• la détection (310) d'une température (T) de l'air dans l'espace intérieur (101),
• la détection (320) d'une humidité relative ($\varphi$) dans l'espace intérieur (101), et
• l'identification (330) d'une infiltration d'eau en fonction de la température (T) détectée et de l'humidité relative ($\varphi$) détectée,

**caractérisé en ce que** l'identification (330) de l'infiltration d'eau est effectuée en fonction d'une différence ($\Delta$) entre la température (T) détectée et un point de condensation ($_T$) déterminé en fonction de l'humidité relative ($\varphi$) détectée et de la température (T) détectée.

2. Procédé selon la revendication 1, **caractérisé en ce que** l'identification de l'infiltration d'eau est effectuée en fonction d'un taux de variation dans le temps ($\dot{\Delta}$) de la différence ($\Delta$) .

3. Procédé selon la revendication 2, **caractérisé en ce que** l'identification de l'infiltration d'eau est effectuée si la différence ($\Delta$) et/ou le taux de variation ($\dot{\Delta}$) de la différence ($\Delta$) dépasse respectivement une valeur seuil statique ou dynamique (S) .

4. Procédé selon l'une quelconque des revendications précédentes, **caractérisé en ce que** l'étape suivante est effectuée

• l'affichage (340) d'une information d'infiltration d'eau en fonction de l'identification (330) de l'infiltration d'eau.

5. Procédé selon l'une quelconque des revendications précédentes, **caractérisé en ce que** l'étape suivante est effectuée

• l'adaptation (350) d'un courant électrique de charge ou de décharge d'une source de courant qui est disposée dans l'espace intérieur (101) du boîtier (100), en particulier d'une batterie, en fonction de l'infiltration d'eau identifiée.

6. Procédé selon l'une quelconque des revendications précédentes, **caractérisé en ce que** l'étape suivante est effectuée

• la mémorisation (360) d'un code d'erreur dans une mémoire électronique en fonction de l'infiltration d'eau identifiée.

7. Procédé selon l'une quelconque des revendications précédentes, **caractérisé en ce que** l'étape suivante est effectuée

> • la modification (370) d'un intervalle d'entretien d'un véhicule en fonction de l'infiltration d'eau identifiée.

**8.** Procédé selon l'une quelconque des revendications précédentes, **caractérisé en ce que** l'étape suivante est effectuée

> • la création (380) d'un rendez-vous de maintenance en fonction de l'infiltration d'eau identifiée, au moyen d'une liaison radio avec un dispositif serveur.

**9.** Procédé selon l'une quelconque des revendications précédentes, **caractérisé en ce que** l'étape suivante est effectuée

> • la diffusion (390) d'un agent dessiccateur en fonction de l'infiltration d'eau identifiée.

**10.** Système comprenant un boîtier (100), comprenant un espace intérieur (101) scellé par rapport à un environnement (190), un capteur d'humidité (110) pour détecter une humidité relative ($\varphi$) dans l'espace intérieur (101), et un capteur de température (120) pour détecter une température (T) dans l'espace intérieur (101) et un circuit électronique (400), dans lequel le boîtier (100) est en particulier un boîtier d'un affichage (210), d'une batterie (220) ou d'une unité d'entraînement (230) d'un véhicule, **caractérisé en ce que** le circuit électronique (400) est aménagé pour effectuer un procédé selon l'une quelconque des revendications 1 à 9, le circuit électronique étant en particulier en outre aménagé pour piloter un moteur électrique d'une bicyclette électrique pour entraîner la bicyclette électrique.

**11.** Véhicule comprenant au moins un système selon la revendication 10, le véhicule étant en particulier une bicyclette électrique (200).

FIG. 1

FIG. 2

FIG. 3

FIG. 4a

FIG. 4b

EP 3 654 008 B1

FIG. 5a

FIG. 5b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10249370 A1
- DE 102012023073 A1
- DE 102013212593 A1